(19) **Europäisches Patentamt European Patent Office Office européen des brevets**

(11) **EP 4 787 011 A1**

(12) **EUROPEAN PATENT APPLICATION**

(43) Date of publication:
05.08.2026 Bulletin 2026/32

(21) Application number: 26153426.7

(22) Date of filing: 22.01.2026

(51) International Patent Classification (IPC):
G01S 7/288 (2006.01)    G01S 7/292 (2006.01)
G01S 7/41 (2006.01)    G01S 13/22 (2006.01)
G01S 13/58 (2006.01)

(52) Cooperative Patent Classification (CPC):
G01S 13/227; G01S 7/2883; G01S 7/2923;
G01S 7/2926; G01S 7/414; G01S 13/582

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.01.2025 IL 31871925

(71) Applicant: Elta Systems Ltd.
7710201 Ashdod (IL)

(72) Inventor: Beilin, Ella
77456 Ashdod (IL)

(74) Representative: Grünecker Patent- und
Rechtsanwälte
PartG mbB
Leopoldstraße 4
80802 München (DE)

(54) **RADAR SIGNAL PROCESSING FOR CLUTTER SPECTRUM REDUCTION**

(57)     A method of pulse-Doppler radar signal processing including: receiving time domain radar data which is based on measurements of reflections of burst including a pulse train emitted to a beam coverage area, the burst including a plurality of dwells, each dwell including a group of pulses having a different pulse repetition interval (PRI); processing the time domain radar data to associate reflection measurements with range for each dwell; combining time domain data for the plurality of dwells, the combining including combining reflection measurements of different dwells for corresponding ranges; transforming, after the combining, the time domain data for the plurality of dwells to produce frequency domain burst data; evaluating the frequency domain burst data to establish existence of one or more targets within the beam coverage area.

Receive time domain radar data for a plurality of dwells, each dwell having a different pulse repetition interval (PRI) 400

Process time domain dwell data to produce a range-pulse map for each dwell 402

Generate combined time domain range-pulse map for the plurality of dwells (a burst range-gate map) 404

Transform time domain burst range-gate map to a frequency domain burst range-doppler map 406

Identify target in burst range-doppler map 408

**EP 4 787 011 A1**

*FIG. 4*

Description

TECHNOLOGICAL FIELD

The present disclosure, in some embodiments, thereof, relates to radar signal processing and, more particularly, but not exclusively, to radar signal processing to reduce a clutter spectrum in radar data.

BACKGROUND ART

Background art, where each art is incorporated in its entirety by reference, includes US Patent No. US7864106 which states:

> "Most modern surveillance radars scan the surrounding space using a relatively narrow radiation beam. The total scan time is usually the user specified parameter of the system. The fraction of scan time, allocated to collect target return from each beam direction, is called time-on-target. During this fraction of time a sequence of pulses is transmitted by the radar. The interval between the rise of any two consecutive pulses is called the PRI (Pulse Repetition Interval) and the rate of the pulses is called PRF (Pulse Repetition Frequency). Detection and measurement processes can be realized by using constant or variable PRF during the time-on-target interval. The maximum SNR can be achieved by coherent integration of all target returns during the entire time-on-target interval. Prima facie, the most tempting scheme for realization of such concept would appear to be to use a single constant pulse repetition frequency (PRF) for transmitting pulse sequence and utilization of target returns. However this scheme does not support unambiguous measurement of range or velocity or both.
> Another problem related to a single PRF scheme of detection is the problem of blind zones (blind ranges and Doppler frequencies) in the detection map. This problem reflects the periodic nature of transmitting and receiving in pulse radar detection scheme and is known as the visibility problem.
> One solution, known in the prior art, to both the ambiguity and the visibility problems is to transmit two or more pulse sequences consecutively, each sequence having a different PRF. Each sub-interval with constant PRF provides a different "scale" of ambiguous but simultaneous measurement of the target range and Doppler frequency. The combination of all measurements (each with a different PRF) during time-on-target interval allows ambiguity resolution, but requires independent attempts of detection. In other words, the requirement to provide simultaneous detection and measurement of the target leads to partitioning of the time-on-target interval to several independent subintervals, each of which represents a relatively small part of the entire time-on-target interval. The detection process in each sub-interval, known also as "Coherent Processing Interval" and for short CPI, can be performed optimally by using coherent integration, but the maximum energy collected from the target return is only a fraction of the entire energy that could be collected during the entire time-on-target interval. Any logical or arithmetical combination of the results of sub-interval leads to losses and degradation in probability of detection in comparison with coherent integration of the signal during entire time-on-target interval. "

Acknowledgement of the above reference/s herein is not to be inferred as meaning that these are in any way relevant to the patentability of the presently disclosed subject matter.

GENERAL DESCRIPTION

Following is a non-exclusive list of some exemplary embodiments of the disclosure. The present disclosure also includes embodiments which include fewer than all the features in an example and embodiments using features from multiple examples, even if not listed below.

Example 1. A method of pulse-Doppler radar signal processing comprising:

receiving time domain radar data which is based on measurements of reflections of burst including a pulse train emitted to a beam coverage area, the burst comprising a plurality of dwells, each dwell including a group of pulses having a different pulse repetition interval (PRI);
processing said time domain radar data to associate reflection measurements with range for each dwell;
combining time domain data for the plurality of dwells, the combining including combining reflection measurements of different dwells for corresponding ranges;
transforming, after said combining, said time domain data for the plurality of dwells to produce frequency domain burst data;
evaluating the frequency domain burst data to establish existence of one or more targets within said beam coverage area.

Example 2. The method according to Example 1, wherein said time domain data for the plurality of dwells is non-coherent.

Example 3. The method according to any one of Examples 1-2, wherein said combining comprises identifying corresponding range gates in different dwells and combining measurement data of the different dwells for the corresponding range gates.

Example 4. The method according to Example 3, wherein said processing comprises producing, for each dwell: a plurality of range gate vectors each including reflection measurements for a specific range gate.

Example 5. The method according to Example 4, wherein said combining

comprises: identifying corresponding range gate vectors in different dwells; and
concatenating data of the corresponding range gate vectors to provide plurality of range gate vectors for the burst.

Example 6. The method according to Example 5, wherein for each said dwell, said plurality of range gate vectors provides a range-pulse map, said processing providing a plurality of range-pulse maps, a range-pulse map for each dwell.

Example 7. The method according to Example 6, wherein said plurality of range gate vectors for the burst provides a burst range-pulse map.

Example 8. The method according to any one of Examples 5-7, wherein said transforming comprises producing a plurality of range-doppler vectors by applying a Fourier transform to each of said plurality of range gate vectors for the burst.

Example 9. The method according to Example 8, wherein said Fourier transform is a fast Fourier transform (FFT).

Example 10. The method according to any one of Examples 8-9, wherein said transforming complies weighting.

Example 11. The method according to Example 10, wherein said transforming provides a a burst range-Doppler map.

Example 12. The method according to any one of Examples 9-11, wherein said evaluating comprises evaluating the range-Doppler map to characterize cells as indicating presence or lack of a target.

Example 13. The method according to any one of Examples 1-12, comprising emitting said pulse train each pulse including electromagnetic (EM) radiation, during a time-on-target associated with a burst;
wherein said receiving comprises measuring reflections of said signal from said beam coverage area.

Example 14. The method according to any one of Examples 1-13, wherein said receiving comprises one or more of down-conversion, sampling, and filtering of said measurements of said reflections to provide said time domain radar data.

Example 15. The method according to any one of Examples 5-14, wherein said identifying comprises determining, for an actual range distance, a corresponding range-gate number for each dwell.

Example 16. The method according to any one of Examples 12-15, wherein said evaluating comprises comparing each cell of the range-Doppler map with a threshold.

Example 17. The method according to Example 16, comprising, determining, for each cell of the range-Doppler map, a background level, wherein said threshold is determined from said background level.

Example 18. The method according to Example 17, wherein determining said background level comprises averaging neighboring cell values.

Example 19. The method according to Example 18, wherein said threshold is said background level multiplied by a constant selected to provide required sensitivity and false alarm rate.

Example 20. The method according to any one of Examples 1-19, comprising receiving verification time domain radar data which is based on measurements of reflections of a verification burst including a verification pulse train emitted to said beam coverage area, the verification burst comprising a plurality of dwells, each dwell including a group of pulses having a different PRI.

Example 21. The method according to Example 20, wherein said dwells of said verification burst have different PRIs to the dwells of said burst.

Example 22. The method according to any one of Examples 20-21, comprising determining range and velocity of the one or more targets by using said time domain radar data and said verification time domain radar data to resolve ambiguity in range and/or velocity of the one or more targets.

Example 23. The method according to any one of Examples 1-22, comprising changing the beam coverage area; and
repeating said method.

Example 24. A pulse-Doppler system comprising:

a radar transmitter configured to emit a burst containing a train of electromagnetic EM radiation radar pulses to a beam coverage area, comprising a sequential series of dwells having different pulse repetition intervals (PRI) from each other;

a radar receiver configured to detect reflections of the emitted pulses and measure timing of the reflections relative to timing of emission of the radar pulses and to produce burst data; and
a processor configured to:

process said time domain radar data to associate reflection measurements with range for each dwell;
combine time domain data for the plurality of dwells, the combining including combining reflection measurements of different dwells for corresponding ranges;
transform, after the time domain data for the plurality of dwells is combined, said time domain data for the plurality of dwells to produce frequency domain burst data;

evaluate the frequency domain burst data to identify range and velocity of any targets within said beam coverage area.

Example 25. A method of pulse-Doppler radar signal processing comprising:

receiving burst data, wherein the burst data includes dwell data of more than one dwell, each dwell having a different pulse repetition interval (PRI);
processing the burst data to provide, for each dwell, a corresponding dwell range-pulse map;
generating a burst range-pulse map, comprising, for each range-gate of the burst range-gate map:

identifying a corresponding range-gate for each of the more than one dwells; and
concatenating data from the corresponding range-gates of the more than one dwell to provide range-gate data for the corresponding range-gate of the burst range-gate map;
transforming the burst range-gate pulse map into a burst range-Doppler map; and

evaluating the range-Doppler map to characterize cells as indicating presence or lack of a target.

Example 26. A pulse-Doppler system comprising:

a radar transmitter configured to emit a burst containing a series of electromagnetic EM radar pulses, comprising a sequential series of dwells having different pulse repetition intervals (PRI) from each other;
a radar receiver configured to detect reflections of the emitted pulses and measure timing of the reflections relative to timing of emission of the radar pulses and to produce burst data; and
a processor configured to:

receive burst data from the radar receiver;
process the burst data to provide, for each dwell, a corresponding dwell range-pulse map;
generate a burst range-pulse map, by, for each range-gate of the burst range-gate map:

identifying a corresponding range-gate for each of the more than one dwells; and
concatenating data from the corresponding range-gates of the more than one dwell to provide range-gate data for the corresponding range-gate of the burst range-gate map;
transforming the burst range-pulse map into a burst range-Doppler map; and

evaluate the range-Doppler map to characterize cells as indicating presence or lack of a target.

Unless otherwise defined, all technical and/or scientific terms used within this document have meaning as commonly understood by one of ordinary skill in the art/s to which the present disclosure pertains. Methods and/or materials similar or equivalent to those described herein can be used in the practice and/or testing of embodiments of the present disclosure, and exemplary methods and/or materials are described below. Regarding exemplary embodiments described below, the materials, methods, and examples are illustrative and are not intended to be necessarily limiting.

Some embodiments of the present disclosure are embodied as a system, method, or computer program product. For example, some embodiments of the present disclosure may take the form of an entirely hardware embodiment, an entirely software embodiment (including firmware, resident software, micro code, etc.) or an embodiment combining software and hardware aspects that may all generally be referred to herein as a "circuit," "module" and/or "system."

Implementation of the method and/or system of some embodiments of the present disclosure can involve performing and/or completing selected tasks manually, automatically, or a combination thereof. According to actual instrumentation and/or equipment of some embodiments of the method and/or system of the present disclosure, several selected tasks could be implemented by hardware, by software or by firmware and/or by a combination thereof, e.g., using an operating system.

For example, hardware for performing selected tasks according to some embodiments of the present disclosure could be implemented as a chip or a circuit. As software, selected tasks according to some embodiments of the present disclosure could be implemented as a plurality of software instructions being executed by a computational device e.g., using any suitable operating system.

In some embodiments, one or more tasks according to some exemplary embodiments of method and/or system as described herein are performed by a data processor, such as a computing platform for executing a plurality of instructions. Optionally, the data processor includes a volatile memory for storing instructions and/or data and/or a non-volatile storage e.g., for storing instructions and/or data. Optionally, a network connection is provided as well. User interface/s e.g., display/s and/or user input device/s are optionally provided.

Some embodiments of the present disclosure may be described below with reference to flowchart illustrations and/or block diagrams. For example illustrating exemplary methods and/or apparatus (systems) and/or and computer program products according to embodiments of the present disclosure. It will be understood that each step of the flowchart illustrations and/or block of the block diagrams, and/or combinations of steps in the flowchart illustrations and/or blocks in the block diagrams, can be implemented by computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart steps and/or block diagram block or blocks.

These computer program instructions may also be stored in a computer readable medium that can direct a computer (e.g., in a memory, local and/or hosted at the cloud), other programmable data processing apparatus, or other devices to function in a particular manner, such that the instructions stored in the computer readable medium can be used to produce an article of manufacture including instructions which implement the function/act specified in the flowchart and/or block diagram block or blocks.

The computer program instructions may also be run by one or more computational device to cause a series of operational steps to be performed e.g., on the computational device, other programmable apparatus and/or other devices to produce a computer implemented process such that the instructions which execute provide processes for implementing the functions/acts specified in the flowchart and/or block diagram block or blocks.

Some of the methods described herein are generally designed only for use by a computer, and may not be feasible and/or practical for performing purely manually, by a human expert. A human expert who wanted to manually perform similar tasks, might be expected to use different methods, e.g., making use of expert knowledge and/or the pattern recognition capabilities of the human brain, potentially more efficient than manually going through the steps of the methods described herein.

## BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:

FIG. 1 is a simplified schematic of a radar system, according to some embodiments of the disclosure;
FIG. 2 is a simplified schematic plot of a radar transmission, according to some embodiments of the disclosure;
FIG. 3 is a simplified schematic plot of radar transmissions and detections for a plurality of dwells, according to some embodiment of the disclosure;
FIG. 4 is a method of target detection, according to some embodiments of the disclosure;
FIGs. 5A-C are simplified schematic range-pulse maps, according to some embodiments of the disclosure;
FIG. 6A is a simplified schematic of a range-Doppler map;
FIG. 6B is a simplified schematic of a multi-PRI range-doppler map, according to some embodiments of the disclosure;
FIGs. 7A-B illustrate a flowchart of a method of target detection, according to some embodiments of the disclosure; and
FIG. 8 is a plot of clutter frequency spectrums, according to some embodiments of the disclosure.

## DETAILED DESCRIPTION OF EMBODIMENTS

The present disclosure, in some embodiments, thereof, relates to radar signal processing and, more particularly, but not exclusively, to radar signal processing to reduce a clutter spectrum in radar data.

## Overview

A broad aspect of some embodiments of the disclosure relates to combining pulse-Doppler radar data acquired in response to emitted electromagnetic (EM) radiation pulse groups where the pulse groups have different pulse repetition intervals (PRIs) and where the combining is performed without phase correction. In some embodiments, a EM radiation pulse train (herein termed a "burst") is emitted where each burst includes multiple dwells having different PRIs. Corresponding radar data for the burst (also herein termed "burst data") includes measured reflections of these EM radiation pulses. Different PRIs potentially enable ambiguity resolution (of target range and/or velocity) and/or prevent blind zones (the ranges corresponding to times during which the system is transmitting and cannot receive) in the data acquired.

Generally, in pulse-Doppler radar, time domain radar data (measured reflections of the emitted pulses), for individual dwells, is coherently integrated to provide frequency domain data, from which the Doppler shifts are calculated to determine velocity. Generally, the time domain radar data acquired for different dwells is non-coherent, the non-coherence associated, e.g., with one or more of different PRIs introducing a new timing interval (phase reset between PRIs), target motion, and sampling. Therefore, the individual dwell data is generally processed separately to allow coherent integration.

An aspect of some embodiments of the disclosure relates to combining dwell data in the time domain, as opposed to frequency domain, effectively increasing observation time, thereby providing, upon transformation to the frequency domain, increased frequency resolution.

A potential benefit of increasing frequency resolution is reduction of clutter spectral width. Radar measurement signals generally include a portion of the signal termed clutter which is produced by stationary background scatterers such as the ground, trees, foliage, and buildings. Decreasing the clutter spectral width may prevent overlap of the clutter spectrum with Doppler frequencies of slow moving targets, identification of which would otherwise be prevented by the clutter signal.

An aspect of some embodiments of the disclosure relates to generating a range-Doppler map for a burst of pulse-Doppler radar data (e.g., as opposed to generating multiple range-Doppler maps corresponding to multiple dwells). The burst range-Doppler map is generated from a burst range-gate (RG) pulse map (PM). Received radar pulse reflection measurement burst data is processed to produce a plurality of dwell RGPMs. Range gates of the burst RGPM map are then each generated by concatenating data from corresponding range-gates of the plurality of dwell RGPMs.

Reflections of pulses from a target in different dwells are located in different range gates (of the different dwells) and have different Doppler phases ($2\pi fdt$) associated with time delay between dwells. However, in some embodiments, phase correction is not performed when combining the dwell data. This is based on an assumption that clutter is stationary and therefore the clutter signal has zero Doppler shift and the same phase in all dwells. This assumption allows combination of the dwell data, prior to transformation to the frequency domain, for identification of targets. This may enable identification of targets providing reflections with sufficiently strong signal power to be identified in a single dwell with respect to background thermal noise but where the signal power is not high enough with respect to background clutter.

In some embodiments, for example, where a target provides a strong enough reflection relative to thermal noise, once a target is identified in the beam coverage area using the time domain combined dwell data, target range and/or velocity may then be determined using coherent integration of radar data of a single dwell.

In some embodiments, although a target is identified using data of a single dwell, the dwell itself may not be known. In some embodiments, an additional herein termed "verification" burst is emitted, e.g., having different PRIs than the original burst. Where one or more dwell (e.g., every dwell) in the verification burst may have a different PRI from all of the dwells of the initial burst. The verification burst may have a same number of dwells or a different number of dwells to the initial burst. Radar data acquired associated with the verification burst may then be used to resolve ambiguity of range and/or doppler frequencies of the target, if the target is then found in data of a PRI of the first burst and data of a PRI of the second burst (the PRIs being different). In some embodiments, the ambiguity resolution may use data of more than two dwells, and/or more than two bursts.

Processing of radar signals as described herein may be used, for example, in surveillance and/or tracking radar or in an ultrasound system.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

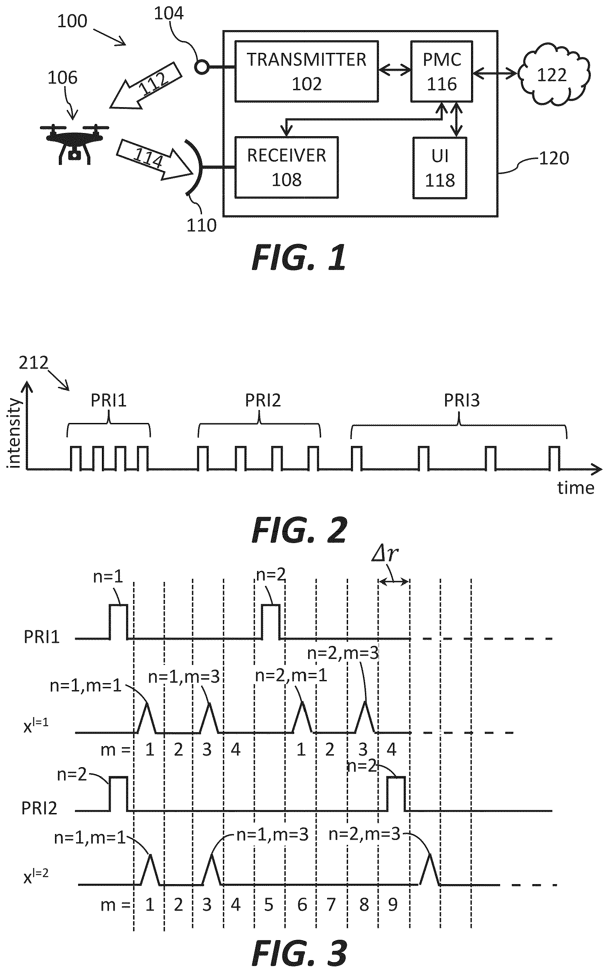

FIG. 1 is a simplified schematic of a radar system **100,** according to some embodiments of the disclosure.

In some embodiments, system **100** includes a transmitter **102** connected to a transmit antenna **104** and a receiver **108** connected to a receive antenna **110.**

Transmitter **102** may transmit via transmit antenna **104** sequences of electromagnetic (EM) signals characterized by their PRF (1/PRI) values.

The transmitted EM signal/s **112** may reach an object **106** which reflects at least a portion of the incident EM signal power, an echo **114** of transmitted signal **112** returning to receiver **108** via receive antenna **110.** In some embodiments, the transmit and receive antennae **104, 110** respectively, are implemented by the same physical device.

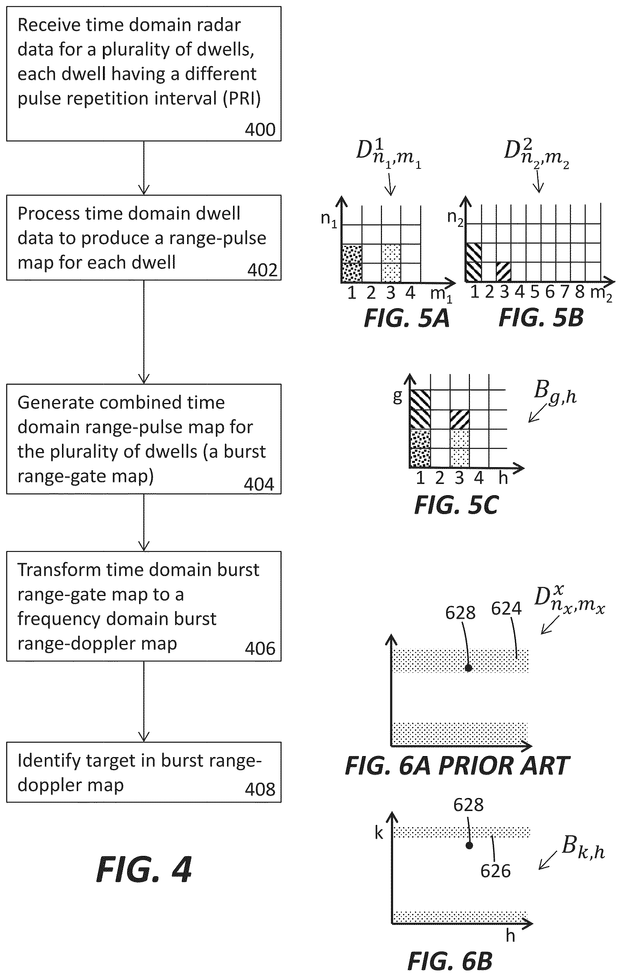

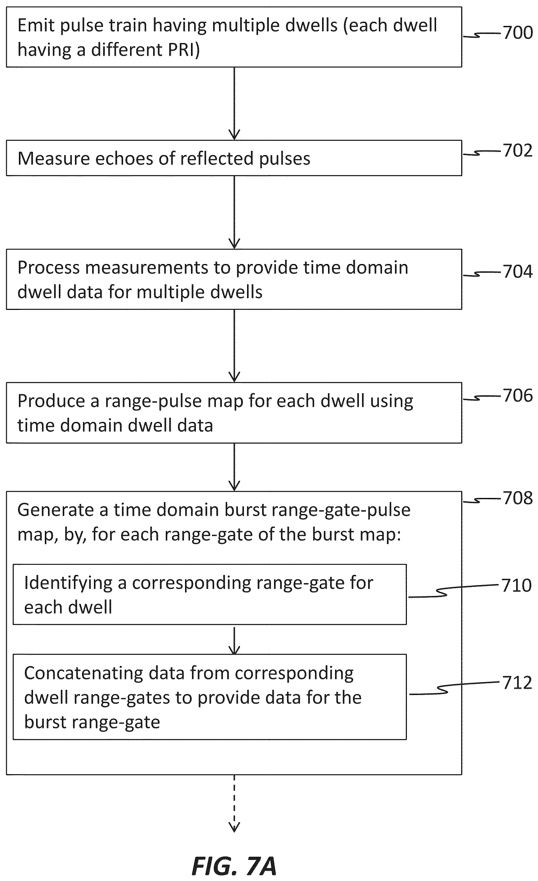

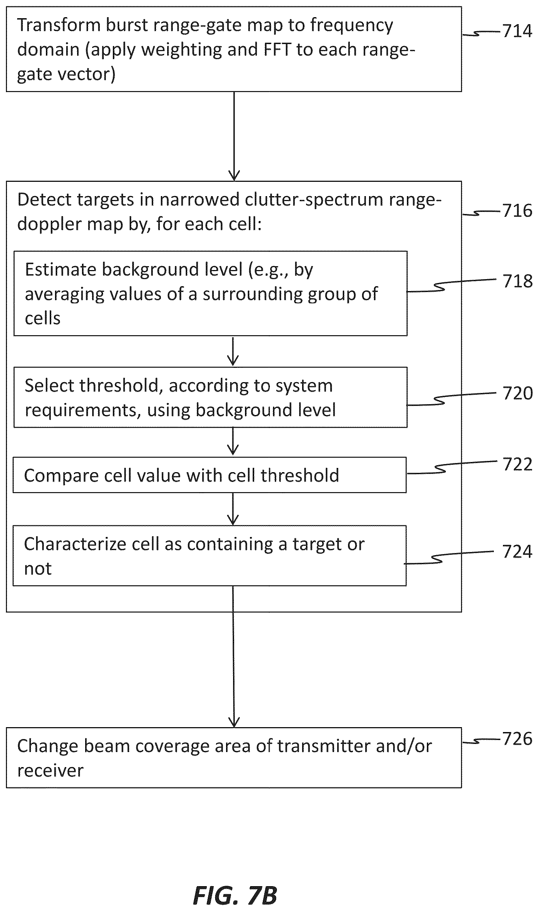

System **100** may include processing and memory circuitry (PMC) **116** configured to control operation of transmitter **102,** receiver **108** and/or process and/or store data sent thereto and/or received therefrom. Where PMC **116** may generate and send control signal/s to transmitter **102.** PMC **116** may process data received to identify and/or characterize object/s **106** (e.g., according to one or more feature of FIG. 4 and/or FIG. 7).

Optionally, transmitter **102** and/or receiver **108** may be configured to transmit and receive signals within a field of view (beam coverage area). Where the beam coverage area may be changed to scan a physical space larger than the beam coverage area. The beam coverage area may be changed mechanically by movement of the transmitter and/or receiver, e.g., effected by one or more actuator which may be controlled by PMC **116.** Additionally or alternatively, the beam coverage area may be changed electronically where a direction of emitted signals may be controlled via transmitter **102** hardware.

Optionally, in some embodiments, system **100** includes connection to external processing and/or storage e.g., located in the cloud **122.** Optionally, system **100** includes a user interface, for receipt of control instructions from and/or display of data to a user. System **100** may include a housing **120** configured to contain and/or protect one or more portion of the system architecture.

System **100** may be employed in surveillance and/or tracking radars, and in ultrasound systems.

FIG. 2 is a simplified schematic plot of a radar transmission **212,** according to some embodiments of the disclosure.

FIG. 2 illustrates radar transmission **224** (e.g., corresponding to signal **112** emitted by transmitter **102** FIG. 1) as a plot of intensity (I) with time (t). Radar transmission **224** may include a pulse train having a plurality of different pulse range intervals PRI1, PRI2, PRI3, where illustrated are three different pulse range intervals (PRIs), which increase with time t along the pulse train. Although illustrated as a square wave, it should be understood that, in some embodiments, illustrated is an envelope to a carrier wave. Where pulses of the pulse train may be formed of a high-frequency (e.g., in the GHz range) sinusoidal carrier wave which is modulated (e.g., by amplitude modulation) to provide the illustrated on/off pulsed envelope to the carrier wave. Although three PRIs are illustrated, having increasing PRI along the pulse train, it should be understood that in some embodiments, other numbers of PRIs e.g. 3-20 PRIs are used and/or where PRI may reduce with time along the pulse train or have a different pattern to increasing or decreasing PRIs.

FIG. 3 is a simplified schematic plot of radar transmissions and detections for a plurality of dwells, according to some embodiment of the disclosure.

FIG. 3 is a simplified schematic plot of radar transmissions PRI1, PRI2, and corresponding detections RG$_{PRI1}$, RG$_{PRI2}$ for a plurality of dwells, according to some embodiments of the disclosure. Plot timescales are the same, where a time duration $\Delta r$ is between range-gates.

FIG. 3 illustrates detection of two targets, one being detected at a first RG (m=1) of both PRI1 and PRI2 an one at a third RG (m=3) of both PRIs.

For ease of illustration and description illustrated PRIs have a one to one mapping between the first four RGs and targets are detected within these RGs.

FIG. 4 is a method of target detection, according to some embodiments of the disclosure.

At **400,** in some embodiments, radar data is received for a plurality of dwells, where each dwell has a different pulse repetition interval (PRI).

At **402,** in some embodiments, the dwell data received in step **400** is processed to provide a range-pulse map for each dwell. Where each range-pulse map may be a matrix of data, $D_{n,m}^{l}$ where *l* is a PRI index, n is a pulse index, and m is a RG index.

For a full burst having L different PRI pulse trains *l* may range between *0* to *L-1.*

n and m may differ for different PRI pulse trains e.g., as illustrated in FIG. 3 where RGs for the two different PRIs are of the same duration, but PRIs are different. This produces data for a different number of range gates for the two different PRIs.

At **404,** in some embodiments, a combined range-pulse map, also termed a "burst range-pulse map" is generated for the plurality of dwells. Where the burst pulse RG map may be a matrix $B_{c,d}$ where *d* is a RG index and *d* is a pulse index.

Generation may include, for each RG index d, concatenating corresponding data for each of the plurality of dwell range-pulse maps.

FIGs. 5A-C are simplified schematic range-pulse maps, according to some embodiments of the disclosure.

FIGs. 5A-B illustrate a simple scenario where RG indexes of both of the dwell range-pulse maps and that of the burst range-pulse map correspond. FIGs. 5A-B illustrating, respectively, map data for PRI1 and PRI2 as illustrated in FIG. 3.

In some embodiments, radar measurement data is processed and arranged in maps as it is received (e.g., in real time). Accordingly FIGs. 5A-B illustrate data receipt and processing into maps for a time scale illustrated in FIG. 3. Where four detections (pulses) have occurred in the time scale and have been processed into PRI1 map of FIG. 5A and only three have occurred in the same time scale and have been processed into PRI2 map of FIG. 5B.

FIG. 5C illustrates a combined dwell range-pulse map e.g. combining the pulse data from the maps in FIG. 5A and FIG. 5B by concatenation.

Returning now to FIG. 4, at **406,** in some embodiments, the burst range-pulse map is transformed to a burst range-doppler map. For example, by applying weighting and Fourier transform (e.g., fast Fourier transform FFT).

FIG. 6A is a simplified schematic of range-Doppler map.

FIG. 6B is a simplified schematic of a multi-PRI range-doppler map, according to some embodiments of the disclosure.

FIG. 6A illustrates a range-Doppler map according to the art, the map, for example, corresponding to a single dwell. FIG. 6B illustrates a burst range-pulse map, where the clutter spectrum **626** is reduced in width compared to clutter spectrum **624** of FIG. 6B.

Returning now to FIG. 4, at **408,** one or more targets are identified using the burst range-doppler map (e.g., according to one or more features of steps **718-724** FIG. 7). Referring back to FIGs. 6A-B, narrowing of the clutter spectrum as illustrated means that a target **628** obscured by clutter in FIG. 6A is, in FIG. 6B, outside the clutter spectrum.

FIGs. 7A-B illustrate a flowchart of a method of target detection, according to some embodiments of the disclosure.

At **700,** in some embodiments, a radar pulse train is transmitted towards a beam coverage area, for example, by a transmitter (e.g., transmitter **102** FIG. 1). The duration of time for which transmitting is towards the beam coverage area may be termed "time-on-target", the pulse train being termed a burst. The burst may include a plurality of groups of pulses having a same PRI each group termed a "dwell" e.g., as illustrated in and/or described regarding burst **212** FIG. 2. Where the groups each have a different PRI from other groups.

At **702,** some embodiments, EM radiation reflected from the beam coverage area is measured. The EM radiation being received by one or more antenna (e.g., antenna **110** FIG. 1) and measured by one or more EM sensor.

At **704,** in some embodiments, EM sensor measurements are processed to provide dwell data for the plurality of dwells. Where processing may include one or more of frequency down-conversion, filtering, splitting the signal into two channels called the in-phase and quadrature, de-modulating (or pulse compressing) and digitalization (analog to digital conversion ADC of the measurement signal e.g., including sampling the analog measurement at a sampling rate). Where the processing steps may occur in other orders than that listed above.

For example, a narrow band signal that is collected at the receiver may, in some embodiments, be modeled as:

$$s(t) = A(t)cos(2\pi f_c t + \Phi(t)) + N(t) \qquad \text{Equation 1}$$

Where t is time, $A$ is the amplitude, $f_c$ is the carrier frequency, $\Phi$ is the phase, and N is noise. This model uses an assumption that the bandwidth of the amplitude $A$ is orders of magnitude smaller than $f_c$.

Down-conversion to Baseband may be performed by mixing received signal $s(t)$ of *Equation 1* is mixed with a reference carrier signal $e^{-j2\pi f c t}$ to remove the carrier frequency $f_c$ to yield a complex baseband representation:

$$r(t) = A(t)e^{j\Phi(t)} + n(t) \qquad \text{Equation 2}$$

Where $r(t)$ is a complex envelope of the signal, $A(t)e^{j\Phi(t)}$ is the desired signal, and n(t) is noise.

Discretization in time may include sampling complex signal $r(t)$ at specific times $t_k$, resulting in discrete samples:

$$r(t_k) = A(t_k)e^{j\Phi(t_k)} + n(t_k) \qquad \text{Equation 3}$$

Data for a single dwell (also herein termed a single "PRF") may then be represented as complex value entity:

$$D_k^l = d^l(t_k) = B^l e^{j(\Phi_0^l + 2\pi f_d t_k)} + n^l(t_k) \qquad \text{Equation 4}$$

Where l is the index of the PRF/dwell $t_k$ represents the sampling times within the dwell, $B^l$ is the amplitude for the l-th dwell, corresponding to $A(t_k)$ in Equation 3 which may be constant within the period of the measurement, $\Phi_0^l$ is a phase constant within the period of the measurement e.g., may be the initial phase of the signal for the l-th dwell, where $\Phi_0^l$ may be related to $\Phi(t)$ in Equation 1, $f_d$ is the Doppler frequency shift introduced by relative motion between the transmitter and receiver, and $n^l(t_k)$ is the sampled complex noise, corresponding to $N(t)$ in Equation 1.

At **706,** in some embodiments, the processed pulse data for each dwell may be expressed as a signal matrix $D_{nm}^l$, which, when the matrix is plotted, is termed a range-pulse map. FIGs. 5A-B illustrate exemplary range-pulse maps. Where the x-axis is the range-gate for the dwell and the y-axis is the pulse index for the dwell. Illustrated in FIGs. 5A-B is data for two emitted pulses e.g., FIGs. 5A-B corresponding to FIG. 3.

The signal matrix $D_{nm}^l = d^l(t_{nm})$ may be provided by expressing the complex valued entities according to Equation 4 from received data (e.g., generated by processing of measurements of radar reflections) for each dwell/PRI used. Where *l* = 0 to L - 1 is the PRI index, *n* is the pulse number in the signal, m is the range gate, and $t_{n,m}$ is the sampling time of the signal of the range gate m of the pulse n, and is given by:

$$t_{n,m}^l = nPRI(l) + mRG \qquad \text{Equation 5}$$

Where *PRI* is the pulse rate interval and *RG* is the duration of a single range gate.

The range-pulse maps express received power from each emitted pulse after processing (e.g., down-conversion, sampling, filtering) in all the ranges, during the coherent single dwell. The x-axis representing the range (or "fast-time") and the y-axis representing the pulse number or ("slow-time"). Signal peak/s on the x-axis expresses range/s for which there are targets.

At **708,** in some embodiments, data of the individual dwells is combined e.g., into a single matrix of range-pulse data for the multiple dwells. This single matrix may be expressed as a range-pulse map for multiple dwells, for example, dwells of a burst. The generating may include, for each range-gate of the burst range-pulse map:

At **710,** corresponding RGs are identified for each dwell. In some embodiments, a range gate number for a specific dwell and actual range distance is determined e.g., whilst accounting for one or more of range folding, offset correction, and discretization into range gates. Identifying, for an actual range $r_i$, corresponding data (data of a corresponding range-gate number $n_l$) for each dwell l, enables combination of the time domain pulse-range data (e.g., as described at step **712).**

The identifying may be according to, for example, Equation 6, where the range-gate number $n_l$ may be determined for a specific dwell *l* and a range $r_i$:

$$n_l = \frac{r_i mod R_{amb}^l - R_{\min}^l}{\Delta r} \qquad \text{Equation 6}$$

Where [$R_{min}$,$R_{max}$] defines a detection region of interest which may be divided into subintervals of distance *Δr*. *Δr* being a distance corresponding to each range-gate:

$$\Delta r = RG \frac{c}{2} \qquad \text{Equation 7}$$

*RG* being a duration, in the time domain data, relating to each range-gate distance, and c is the speed of light. $R_{amb}^l$ is the unambiguous range for the *l*-th PRI which is defined as being a maximum range (distance) at which a target can be located before range ambiguity occurs (ambiguity e.g., occurring when the radar signal may be confused with echoes from subsequent pulses).

$$R_{amb}^l = \frac{c}{2} PRI^l \qquad \text{Equation 8}$$

Where *c* is the speed of light and *PRI^l* is the Pulse Repetition Interval for the *l*-th dwell.

The $mod R_{amb}^l - R_{\min}^l$ operation in Equation 6 ensures that the range $r_i$ is folded into the range interval $[0, R_{amb}^l]$. This accounts for range ambiguity, where echoes from targets beyond the unambiguous range appear to "wrap around" into the next range interval due to the periodic nature of pulse transmissions. The modulo operation $mod R_{amb}^l$ helps determine the effective range of a target within a single unambiguous range interval for the given PRI. It resolves ambiguity by mapping the true range $r_i$ to a range gate number $n_l$ that corresponds to the measured return within the radar's unambiguous range.

Equation 6 calculates the range gate number $n_i$ for a target located at $r_i$ whilst accounting for range folding (modulo operation), offset correction ( $R_{min}^l$ ), and discretization into range gates ($\Delta r$).

At **712,** data from the corresponding RGs of the dwells is concatenated to provide data for a corresponding multi-dwell (burst) RG. Where, for each RG of the burst range-pulse map, data from the identified corresponding RGs of the plurality of dwells is concatenated e.g., the corresponding RG vectors of the different dwells are concatenated.

At **714,** in some embodiments, the burst range-pulse map is transformed to the frequency domain e.g., by coherent integration. For example, by applying weighting and a discrete Fourier transform (e.g., fast Fourier transform FFT) to each range-gate vector $h$ of matrix $B_{g,h}$ to generate a signal spectrum for each range gate $d$.

The combination of all spectra for all range gates $g$ may provide a folded range-Doppler map (matrix $B_{k,h}$) given by determining a vector $b_{kd}$ for each range gate d of the burst range-pulse map/matrix $B_{g,h}$.

$$b_{kh} = \sum_{g=0}^{G_h-1} b_{gh} w_g \, e^{-\frac{2\pi jkg}{K}} \qquad\qquad Equation\ 9$$

$k = 1, ...,K,\ d = 1, ...,D$

Where $G_h$ is the number of data cells for each range-gate $h$ in the concatenated range-gate vector (corresponding to pulses for the different dwells), $k$ is an index of the Doppler frequency, $K$ is the number of Doppler frequencies, $w_g$ is a weighting factor, and $D$ is the number of range gates of the burst range-pulse map.

In some embodiments, weighting factors are selected to provide desired levels of spectral sidelobes. Spectral sidelobes are where signal power (e.g., of a target detected) in a specific doppler and a specific range gate may leak into other doppler locations, potentially masking and preventing detection of other targets at those masked doppler frequencies. There may be a tradeoff between main lobe width and sidelobe suppression. Where a wider main lobe has lower frequency resolution for the target, but produces less leakage to sidelobes preventing masking in other frequencies. The weighting factors may be selected based on, how important, for a specific application, determining accurate velocity of a target is with respect to importance of identifying other targets.

A real-valued range-Doppler map is generated. For example, where a real-valued K by D matrix P is defined by setting $P_{kd} = |X_{kd}|^2$ for each pair of indices $k$ and $h$.

At **716,** in some embodiments, targets are detected in the real-valued clutter-narrowed range-doppler map $P_{kh}$ by, for each cell, performing steps **718-722.**

At **718,** a background level is estimated. Where, for different cells and/or regions of the range-doppler map (including more than one cell) a background level is determined. In some embodiments, a background level is determined by averaging the values of a plurality of cells.

For example, by averaging values of neighboring cells e.g., for a specific cell, a background level may be determined as an average of a plurality of cells nearby. Where the cells averaged by be immediate neighbors, or larger numbers of neighboring cells. The background level for a cell may include the value of the cell itself.

Where Equation 10 provides an example for determining the background level $q_{kh}$ by averaging neighboring cells which are immediately adjacent:

$$q_{\alpha\beta} = \frac{\sum_{k=\alpha-1}^{k=\alpha+1} \sum_{h=\beta-1}^{h=\beta+1} p_{kh}}{6} \qquad\qquad Equation\ 10$$

At **720,** in some embodiments, a threshold level for the cell is determined from the background level, according to system requirements. The threshold may be selected based on a desired tradeoff between sensitivity and false alarm rate. Where, in some embodiments, the threshold is determined as a multiple of the background level. In some embodiments, the multiple is a constant. Where a lower threshold (e.g., lower constant) is associated with higher sensitivity and a higher false alarm rate and a higher threshold (e.g., higher constant being associated with lower sensitivity but a lower false alarm rate.

At **722,** the cell value is compared with the threshold, and if it above the threshold, the cell is characterized as containing a target.

Steps **718-722** may be repeated for each cell in the burst range-doppler map.

Optionally, in some embodiments, information regarding targets is used. Where the information may include existence of a target within the beam coverage area and/or approximate range and/or velocity as provided by the cell co-ordinates of cells characterized as containing a target.

In some embodiments, information regarding identified target/s is communicated to a user. For example, via a user interface (e.g., **118** UI FIG. 1).

In some embodiments, once existence of a target has been established, target range and/or velocity may be determined from the acquired burst data. For example, where data for multiple dwells may be individually coherently integrated, the frequency domain data being used to characterize the target's range and/or velocity (e.g., using existing radar technique/s). This may, however, produce ambiguous results as the may target be detected based on data of a single dwell, where the particular dwell (e.g., due to combination of time domain data) is not known.

In some embodiments, an additional verification burst is then transmitted, the burst having different PRFs which may be different to the PRFs of the initial burst. The dwell data of the verification burst may be then used to resolve ambiguity (e.g., range and Doppler ambiguity) using the detections data of both bursts. Ambiguity resolution may be achieved by finding the target using two different PRFs (in the initial burst, the target appears found in a single dwell.

The non-ambiguous range and doppler of the target may be found using an unfolding process where, for more than one PRF (e.g., PRF1, PRF1), the ambiguous range interval ($R_{amb,1}$, $R_{amb,2}$) is added to an ambiguous range ($r_1$, $r_2$) from the dwell a number of times until an unambiguous range R is found where:

$$r_1 = R \bmod R_{amb,1} \qquad\qquad Equation\ 11$$

$$r_2 = R \bmod R_{amb,2} \qquad\qquad Equation\ 12$$

In some embodiments, the information regarding identified target/s is used to acquire additional data. For example, where, if target/s are identified in the beam coverage area, additional radar pulses may be emitted towards the same beam coverage area. The additionally acquired radar data may be then used to provide more accurate values for range and/or velocity of the target/s (e.g., as described regarding the verification burst). For example, by performing coherent integration on individual dwells, and then combining the dwell data in the frequency domain to find range and velocity for target/s e.g., according to existing radar technique/s.

At **724,** the system beam coverage area may be changed (e.g., by physically moving and/or electronically orientating) the transmitter and/or receiver. Where, steps **700-722** may be repeated for a different beam coverage area e.g., different beam coverage areas sequentially to provide target scanning of an area.

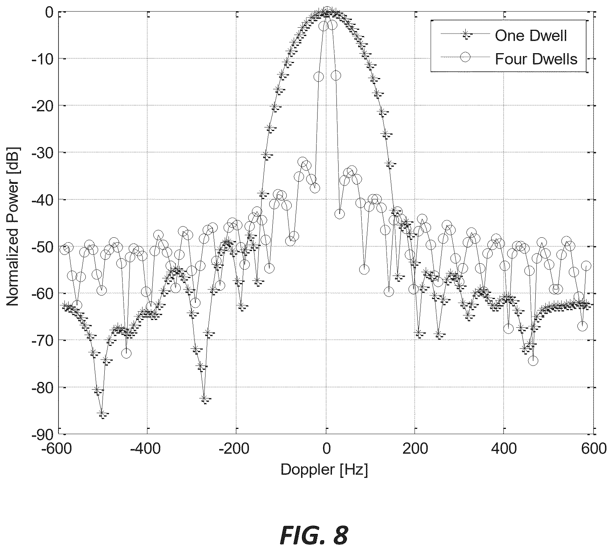

FIG. 8 is a plot of clutter frequency spectrums, according to some embodiments of the disclosure.

FIG. 8 illustrates, for acquired measurements, a clutter spectrum for an individual PRI range-doppler map ("One-Dwell"), and that of a burst (including four dwells) range-doppler map ("Four-Dwells) generated according to the description within this document. In the plot, power of the clutter spectrums (y-axis) has been normalized to show relative widths of the spectrums.

**General**

As used within this document, the term "about" refers to $\pm20\%$

The terms "comprises", "comprising", "includes", "including", "having" and their conjugates mean "including but not limited to".

The term "consisting of" means "including and limited to".

As used herein, singular forms, for example, "a", "an" and "the" include plural references unless the context clearly dictates otherwise.

Within this application, various quantifications and/or expressions may include use of ranges. Range format should not be construed as an inflexible limitation on the scope of the present disclosure. Accordingly, descriptions including ranges should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within the stated range and/or subrange, for example, 1, 2, 3, 4, 5, and 6. Whenever a numerical range is indicated within this document, it is meant to include any cited numeral (fractional or integral) within the indicated range.

It is appreciated that certain features which are (e.g., for clarity) described in the context of separate embodiments, may also be provided in combination in a single embodiment. Where various features of the present disclosure, which are (e.g., for brevity) described in a context of a single embodiment, may also be provided separately or in any suitable sub-combination or may be suitable for use with any other described embodiment. Features described in the context of various embodiments are not to be considered essential features of those embodiments, unless the embodiment is inoperative without those elements.

Although the present disclosure has been described in conjunction with specific embodiments thereof, it is evident that many alternatives, modifications, and variations will be apparent to those skilled in the art. Accordingly, this application intends to embrace all such alternatives, modifications and variations that fall within the spirit and broad scope of the appended claims.

All references (e.g., publications, patents, patent applications) mentioned in this specification are herein incorporated in their entirety by reference into the specification, e.g., as if each individual publication, patent, or patent application was individually indicated to be incorporated herein by reference. Citation or identification of any reference in this application should not be construed as an admission that such reference is available as prior art to the present disclosure. In addition, any priority document(s) and/or documents related to this application (e.g., co-filed) are hereby incorporated herein by reference in its/their entirety.

Where section headings are used in this document, they should not be interpreted as necessarily limiting.

## Claims

1. A method of pulse-Doppler radar signal processing comprising:

    receiving time domain radar data which is based on measurements of reflections of burst including a pulse train emitted to a beam coverage area, the burst comprising a plurality of dwells, each dwell including a group of pulses having a different pulse repetition interval (PRI);
    processing said time domain radar data to associate reflection measurements with range for each dwell;
    combining time domain data for the plurality of dwells, the combining including combining reflection measurements of different dwells for corresponding ranges;
    transforming, after said combining, said time domain data for the plurality of dwells to produce frequency domain burst data;
    evaluating the frequency domain burst data to establish existence of one or more targets within said beam coverage area.

2. The method according to claim 1, wherein said combining comprises identifying corresponding range gates in different dwells and combining measurement data of the different dwells for the corresponding range gates.

3. The method according to claim 2, wherein said processing comprises producing, for each dwell:
   a plurality of range gate vectors each including reflection measurements for a specific range gate.

4. The method according to claim 3, wherein said combining comprises:

    identifying corresponding range gate vectors in different dwells; and
    concatenating data of the corresponding range gate vectors to provide plurality of concatenated range gate vectors for the burst.

5. The method according to claim 4, wherein for each said dwell, said plurality of range gate vectors provides a range-pulse map, said processing providing a plurality of range-pulse maps, a range-pulse map for each dwell.

6. The method according to claim 5, wherein said plurality of concatenated range gate vectors for the burst provides a burst range-pulse map.

7. The method according to any one of claims 5-6, wherein said transforming one or more of:

    • comprises producing a plurality of range-doppler vectors by applying a Fourier transform to each of said plurality of concatenated range gate vectors for the burst;
    • comprises weighting; and
    • provides a burst range-Doppler map wherein said evaluating comprises evaluating the range-Doppler map to characterize cells as indicating presence or lack of a target.

8. The method according to any one of claims 1-7, wherein one or more of:

    • the method comprises changing the beam coverage area and then repeating said method;
    • the method comprises emitting said pulse train each pulse including electromagnetic (EM) radiation, during a time-on-target associated with a burst; wherein said receiving comprises measuring reflections of said signal from said beam coverage area;
    • said receiving comprises one or more of down-conversion, sampling, and filtering of said measurements of said reflections to provide said time domain radar data.

9. The method according to any one of claims 5-8, wherein said identifying comprises determining, for an actual range distance, a corresponding range-gate number for each dwell.

10. The method according to any one of claims 7-9, comprising determining a background level, for each cell of the range-Doppler map;
   wherein said evaluating comprises comparing each cell of the range-Doppler map with a threshold determined from said background level.

11. The method according to claim 10, wherein one or more of:

   • said determining said background level comprises averaging neighboring cell values; and
   • said threshold is said background level multiplied by a constant selected to provide required sensitivity and false alarm rate.

12. The method according to any one of claims 1-11, comprising receiving verification time domain radar data which is based on measurements of reflections of a verification burst including a verification pulse train emitted to said beam coverage area, the verification burst comprising a plurality of dwells, each dwell including a group of pulses having a different PRI.

13. The method according to claim 12, wherein said dwells of said verification burst have different PRIs to the dwells of said burst.

14. The method according to any one of claims 12-13, comprising determining range and velocity of the one or more targets by using said time domain radar data and said verification time domain radar data to resolve ambiguity in range and/or velocity of the one or more targets.

15. A pulse-Doppler system comprising:

   a radar transmitter configured to emit a burst containing a train of electromagnetic EM radiation radar pulses to a beam coverage area, comprising a sequential series of dwells having different pulse repetition intervals (PRI) from each other;
   a radar receiver configured to detect reflections of the emitted pulses and measure timing of the reflections relative to timing of emission of the radar pulses and to produce burst data; and
   a processor configured to:

   process said time domain radar data to associate reflection measurements with range for each dwell;
   combine time domain data for the plurality of dwells, the combining including combining reflection measurements of different dwells for corresponding ranges;
   transform, after the time domain data for the plurality of dwells is combined, said time domain data for the plurality of dwells to produce frequency domain burst data;
   evaluate the frequency domain burst data to identify range and velocity of any targets within said beam coverage area.

**FIG. 1**

**FIG. 2**

**FIG. 3**

Receive time domain radar
data for a plurality of dwells,
each dwell having a different
pulse repetition interval (PRI)

400

Process time domain dwell
data to produce a range-pulse
map for each dwell       402

Generate combined time
domain range-pulse map for
the plurality of dwells (a burst
range-gate map)          404

Transform time domain burst
range-gate map to a
frequency domain burst
range-doppler map        406

Identify target in burst range-
doppler map              408

## FIG. 4

$D^1_{n_1,m_1}$

$n_1$

1 2 3 4 $m_1$

## FIG. 5A

$D^2_{n_2,m_2}$

$n_2$

1 2 3 4 5 6 7 8 $m_2$

## FIG. 5B

$g$

$B_{g,h}$

1 2 3 4 $h$

## FIG. 5C

628  624  $D^x_{n_x,m_x}$

## FIG. 6A PRIOR ART

628

$k$

626  $B_{k,h}$

$h$

## FIG. 6B

Emit pulse train having multiple dwells (each dwell having a different PRI) —700

Measure echoes of reflected pulses —702

Process measurements to provide time domain dwell data for multiple dwells —704

Produce a range-pulse map for each dwell using time domain dwell data —706

Generate a time domain burst range-gate-pulse map, by, for each range-gate of the burst map: —708

Identifying a corresponding range-gate for each dwell —710

Concatenating data from corresponding dwell range-gates to provide data for the burst range-gate —712

**FIG. 7A**

Transform burst range-gate map to frequency domain (apply weighting and FFT to each range-gate vector) ⟞—714

Detect targets in narrowed clutter-spectrum range-doppler map by, for each cell: ⟞—716

Estimate background level (e.g., by averaging values of a surrounding group of cells ⟞— 718

Select threshold, according to system requirements, using background level ⟞— 720

Compare cell value with cell threshold ⟞— 722

Characterize cell as containing a target or not ⟞— 724

Change beam coverage area of transmitter and/or receiver ⟞—726

**FIG. 7B**

**FIG. 8**

EUROPEAN SEARCH REPORT

Application Number

EP 26 15 3426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 709 694 B1 (HOLLANDSE SIGNAALAPPARATEN BV [NL]; THALES NEDERLAND BV [NL]) 14 April 2004 (2004-04-14) | 1-15 | INV. G01S7/288 G01S7/292 |
| Y | * paragraphs [0001], [0009], [0017], [0020], [0022], [0023]; figure 1 * | 1-15 | G01S7/41 G01S13/22 G01S13/58 |
| X | VAN GENDEREN P ET AL: "Non coherent integration in a medium PRF radar", 19950101; 19950000, 1 January 1995 (1995-01-01), pages 91-94, XP002420347, | 1-15 | |
| Y | * the whole document * | 1-15 | |
| Y | US 4 973 968 A (HURD DAVID L [GB]) 27 November 1990 (1990-11-27) * column 6, lines 18-46; figures 1-4 * | 11 | |
| Y | EP 3 015 880 B1 (NXP BV [NL]) 5 February 2020 (2020-02-05) * paragraphs [0021], [0055] * | 1-15 | |

TECHNICAL FIELDS SEARCHED (IPC)

G01S

The present search report has been drawn up for all claims

| Place of search | Date of completion of the search | Examiner |
|---|---|---|
| Munich | 28 May 2026 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 787 011 A1**

## ANNEX TO THE EUROPEAN SEARCH REPORT
## ON EUROPEAN PATENT APPLICATION NO.

EP 26 15 3426

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2026

| Patent document cited in search report | | Publication date | Patent family member(s) | | Publication date |
|---|---|---|---|---|---|
| EP 0709694 | B1 | 14-04-2004 | AU | 695841 B2 | 27-08-1998 |
| | | | CA | 2161073 A1 | 26-04-1996 |
| | | | DE | 69532877 T2 | 24-03-2005 |
| | | | EP | 0709694 A1 | 01-05-1996 |
| | | | NL | 9401767 A | 03-06-1996 |
| | | | US | 5627545 A | 06-05-1997 |
| US 4973968 | A | 27-11-1990 | NONE | | |
| EP 3015880 | B1 | 05-02-2020 | CN | 105572660 A | 11-05-2016 |
| | | | EP | 3015880 A1 | 04-05-2016 |
| | | | US | 2016124086 A1 | 05-05-2016 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 7864106 B